# EUROPEAN PATENT SPECIFICATION

(11) **EP 2 853 300 B1**
(45) Date of publication and mention of the grant of the patent: **26.10.2016**
(21) Application number: 13186270.8
(22) Date of filing: 27.09.2013
(51) Int. Cl.: B01D 3/10

(54) **SYSTEM FOR COMBINED ENERGY CONVERSION AND WATER PURIFICATION**
SYSTEM FÜR KOMBINIERTE ENERGIEUMWANDLUNG UND WASSERREINIGUNG
SYSTÈME DE CONVERSION D'ÉNERGIE COMBINÉE ET PURIFICATION DE L'EAU

(43) Date of publication of application: 01.04.2015
(73) Proprietor: King Abdulaziz City for Science & Technology (KACST), 11442 Riyadh (SA)
(72) Inventor: Ba-abbad, Mazen Abdullah, 11442 Riyadh (SA); Al-Ansari, Hany A., 11421 Riyadh (SA); Al-kudsi, Abdullah M., 11442 Riyadh (SA); Al-Otaibi, Zaid S., 11442 Riyadh (SA)
(74) Representative: Goddar, Heinz J.

(56) References cited:
- US-A- 3 420 745
- US-A- 4 954 223

## Description

The present invention relates to a system for combined electric energy conversion and water purification.

Today, there are many electrical power generation systems that convert mechanical and/or thermal energy into electrical energy. However, most of these systems are very complex and require frequent maintenance, which make them expensive. In addition, when combusting certain fuels, such as low grade fuels that contain many contaminants, or waste (in waste to electricity power plants) many existing systems experience corrosion and suffer from debris and deposits blocking the system.

Combining the electric power generation systems with water purification systems that take the waste heat and utilize it to purify water was done in the past decades. For example, some systems use the low grade heat rejected in the condenser of a steam turbine to purify water. Other systems use the hot exhaust gas of a gas turbine or piston engine to purify water. However, these systems are very complex and very expensive to maintain and are only economically viable at large scale.

US 3 402 745 A discloses a system for combined energy conversion and water purification comprising a water purification, in particular water desalination, sub-system. It further discloses a vacuum producing system that is coupled to the water purification sub-system.

US 4 954 223 A relates to a system for combined energy conversion and water purification comprising a water purification, in particular water desalination, sub-system. Said system comprises an engine coupled to the water purification sub-system.

Accordingly, it is the main object of the present invention to provide a less complex and cheaper system for combined energy conversion and water purification.

This object is solved according to the present invention by a system for combined energy conversion and water purification, in particular water desalination, comprising: a water purification, in particular water desalination, sub-system adapted to low temperature boil water to be purified at reduced pressure and at least one engine coupled to the water purification sub-system and adapted to generate reduced pressure needed in the water purification sub-system for generating water vapor out of the water to be purified and to generate pressure needed in the water purification sub-system for condensing a generated water vapor into fresh water, wherein the engine is an electric linear generator/motor comprising: an elongate stator, an electrical induction coil extending lengthwise within or around the stator, a rotor including or carrying at least one permanent magnet and capable of moving linearly to and fro relative to the stator, and a means for providing connection of the respective ends of the coil with an electrical energy storage, electrical energy source, electric device or the like, further comprising a pipe, both pipe ends being sealed by a flexible diaphragm and the pipe being filled with an incompressible fluid, the stator is designed as a sleeve sitting on the pipe and that the rotor is located in the pipe. So the engine can be used as a generator or as a motor.

According to a special embodiment of the system the sub-system is adapted to boil water at a temperature that is lower than the atmospheric temperature.

The system can further include an internal combustion engine, preferably a four stroke internal combustion engine, for generating electric energy by way- of the engine in an expansion stroke simultaneous to generating the pressure needed in the water purification sub-system for condensing the generated water vapor into fresh water.

Preferably, the system is adapted to use the heat of exhaust gas of the combustion engine for said low temperature boiling of the water.

Also, the system can further comprise a heat exchanger that is arranged so as the water to be purified when being in or flowing through the heat exchanger can absorb heat needed for boiling at low temperature from a medium to be cooled that is conveyed through a tube extending through the heat exchanger.

In the present application the term "rotor" is used for the movable part of the linear generator. It should therefore be understood that the term "rotor" does not relate to a rotating body but to a body moving linearly to and fro.

According to a special embodiment of the electric generator/motor the rotor is substantially rod-shaped.

In particular, both ends of the rod can be expanded.

Conveniently, the rotor is electromagnetically suspended in the sleeve.

Preferably, the sleeve includes at least one superconducting magnet or electromagnet preferably with dynamic control or is surrounded by at least one superconducting magnet or electromagnet preferably with dynamic control.

Alternatively, at least one superconducting magnet or electromagnet preferably with dynamic control is arranged on the outer side of the sleeve.

According to a further special embodiment of said generator, at both ends of the pipe a section is located, the inner surface thereof expanding to the respective pipe end.

In particular, the sections can be integrally formed with the pipe or the sections can be removably fixed to the pipe.

Preferably, the inner surface of the sections is conical.

According to another special embodiment of the system, the water purification sub-system comprises a preferably horizontally oriented fluid pumping tube and a preferably horizontally oriented water purification tube for receiving water to be purified, the pipe of the at least one electric generator/motor is vertically oriented and the lower diaphragm thereof is in preferably direct contact with the inner of the fluid pumping tube and the upper diaphragm thereof is in preferably direct contact with the inner of the water purification tube.

In particular, it can comprise a raw water tank for receiving water to be purified that is in fluid communication with the water purification tube, and a tube extending through the raw water tank for conveying heat exchange fluid to be cooled.

According to another special embodiment of the system, the water purification sub-system, comprises a preferably horizontally oriented capsule transit tube and a preferably horizontally oriented water purification tube for receiving water to be purified, the pipe of the at least one electric generator/motor is vertically oriented and the lower diaphragm thereof is in preferably direct contact with the inner of the water purification tube and the upper diaphragm thereof is in preferably direct contact with the inner of the capsule transit tube.

Finally, the system can further comprise a raw water tank for receiving water to be purified that is in fluid communication with the water purification tube, and a tube extending through the raw water tank for conveying heat exchange fluid to be cooled.

By way of the invention integrated energy conversion can be simplified and therefore cheaper. Energy can be converted from a less usable form to a more usable form in a simple and low cost way. High efficiency in energy conversion can be attained by making multiple useful outputs from a single input. So in each case a single low usability form of energy can be converted into a multiple high usability form of energy. Even in the case of water purification (desalination), pure water can be regarded as a usable form of energy because it can produce osmotic power.

A simple free-piston linear generator/motor can be used to construct integrated energy conversion systems in a much lower cost and simpler way than in the prior art.

Corrosion and contamination effects can be reduced by isolating corrosive and/or contaminating fluids from hard to reach and system critical areas. This is done by using diaphragms. All of these features alone or in combination simplify the design and therefore the cost for the whole system is reduced and the maintenance is simplified.

Further features and advantages of the invention will become clear from the accompanying claims and the following description, in which preferred embodiments of the invention are illustrated in detail with reference to the schematic drawings, wherein
- Figure 1: shows the operation of a system for combined energy conversion and water purification according to a preferred embodiment of the invention;
- Figure 2: shows a system for combined energy conversion and water purification according to a further special embodiment of the invention in different operation states;
- Figure 3: shows the operation of a thermal energy converting system according to a further embodiment of the invention;
- Figure 4: shows a system for combined energy conversion and water purification according to a further special embodiment of the invention;
- Figure 5: shows the system of figure 4 in a different operation state;
- Figure 6: shows the system of figure 4 in a further different operation state;
- Figure 7: shows a preparatory step regarding the system of figure 4;
- Figure 8: shows a further preparatory step regarding the system of figure 4;
- Figure 9: shows an initial state of an electric linear generator/motor of the system of figure 4;
- Figure 10: shows an intermediate state of said generator/motor of figure 9;
- Figure 11: shows a final state of said generator/motor of figure 9;
- Figure 12: shows a system for combined energy conversion and water purification according to a further special embodiment of the invention;
- Figure 13: shows the system of figure 12 in a different operation state;
- Figure 14: shows a system of figure 12 in a further different operation state;
- Figure 15: shows a preparatory step with regard to the system of figure 12;
- Figure 16: shows a further preparatory step regarding the system of system 12;
- Figure 17: shows an initial state of an electric linear generator/motor of the system of figure 12 in an initial state;
- Figure 18: shows an intermediate state of the generator/motor of figure 17; and
- Figure 19: shows a final state of said generator/motor of figure 17.

Water purification is the process of removing undesirable chemicals, biological contaminants, suspended solids and gases from contaminated water. The goal is to produce water fit for specific purpose. Most water is purified for human consumption (drinking water) but water purification may also be designed for a variety of other purposes, including meeting the requirements of medical, pharmacological, chemical and industrial applications. In general the method used include physical processes such as filtration, sedimentation, and distillation, biological processes such as slow sand filters and biologically active carbon, chemical processes such as flocculation and chlorination and the use of electromagnetic radiation, such as ultra violet light.

Distillation is a method of separating mixtures based on differences in volatility of components in a boiling liquid mixture. Commercially, distillation has a number of applications. It is used to separate crude oil into more fractions for specific uses such as transport, power generation and heating. Water is distilled to remove impurities, such as salt from sea water. This is also called desalination. Water desalination is a process by which salt is separated from salt water. Evaporation is an effective method of achieving this goal. Evaporation is a process involving a phase change in water molecules from a liquid to a gaseous state while leaving the water surface and the dissolved materials in the liquid state. The rate of evaporation is enhanced by increasing the liquid temperature and/or decreasing the pressure in the liquid, i.e., performing evaporation in a vacuum.

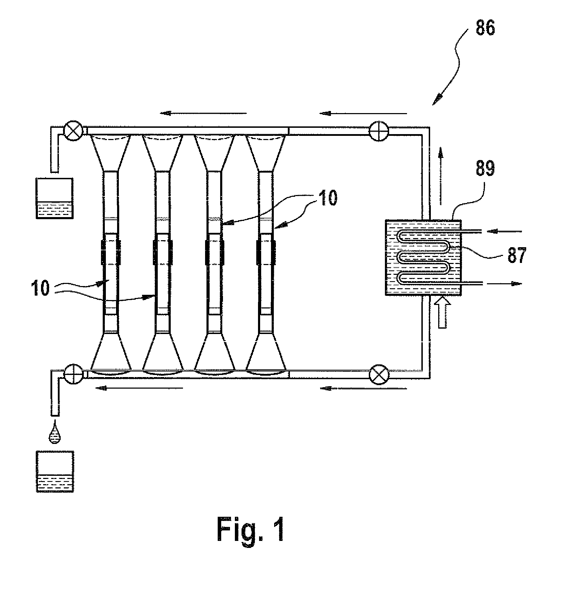

Figure 1 shows the operation of a system 86 for combined energy conversion and water purification. Said system comprises an electric linear generator 10 (fourfold). In this embodiment, the upper and lower arms of the system 86 operate in sequence. Suction mode (stroke) (upper arm) uses suction (needs external electric power supplies). This suction causes the raw water (which is to be distilled) to get its pressure reduced and thus its temperature reduced. The water boils at this reduced pressure and temperature and the water vapor passes in between the valves of the upper arm, where it is held in the tube between the valves until the compression stroke. The compression stroke uses compression (when suction occurs in one side, compression is done on the other side) to compress the water vapor in the tube between the valves. This pressure causes a water vapor to condensate into distilled water and to collect afterwards. Said system 70 is used to distill water and to provide cooling (water cooling). Power is supplied to the system via the electric linear generator 10. Multiple systems can be used to increase the capacity of the system.

The system of figure 1 provides cooling in addition to water purification (water desalination). The raw water under reduced pressure (the diaphragm is pulled to make suction) boils under the temperature. This boiling at low temperature requires heat. The heat can be absorbed from another fluid which is circulated through a serpentine 87 extending in a raw water tank 89 functioning as a heat exchanger. So the other fluid is a fluid to be cooled.

When the system 86 operates as a stand-alone system, it will consume electric energy and produce purified water and cooling (cooled fluid).

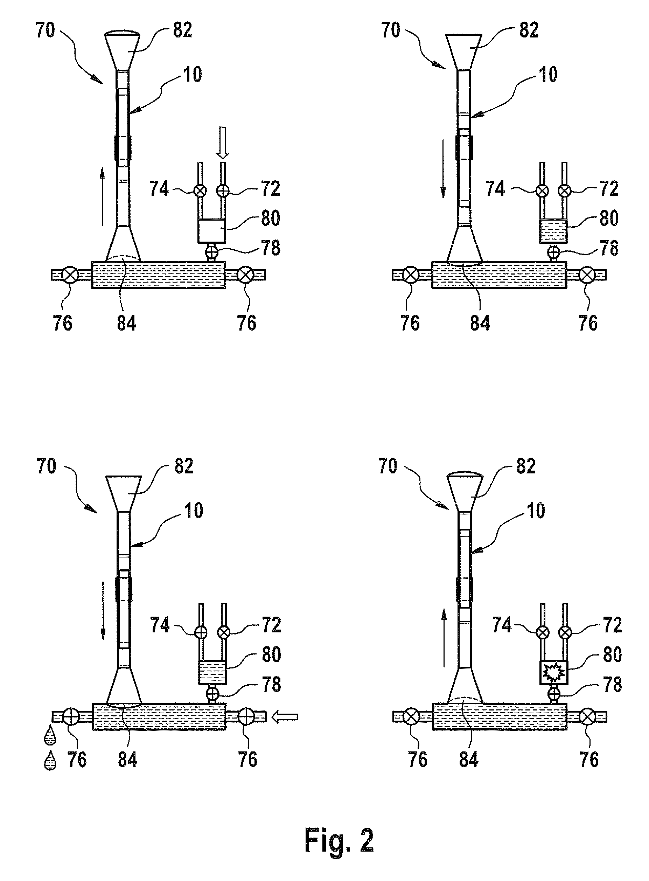

In the system 70 shown in figure 2 and comprising an electric linear generator/motor 10, in the intake stroke (upper left) the system takes electric power (similar to multi-cylinder internal combustion engine where power is taken from the outputs of other cylinders through the crankshaft). Air/fuel valve(s) 72 is/are opened and exhaust fluid valve(s) 74 and flushing fluid valves 76 are closed, but liquid chamber valve 78 is opened to pass sucked liquid to a combustion chamber 80. The upper chamber 82 is in the compression. If the upper chamber 82 was used for water desalination, the upper chamber contains water vapor and it will condense when pressurized into distilled water. The required pressure in this case can be atmospheric pressure, which requires little or no additional power from the system.

Said electric linear generator/motor 10 comprises an elongate stator, an electrical induction coil extending lengthwise within the stator, an electrical induction coil extending lengthwise within the stator, a rotor capable of moving linearly to and fro relative to the stator and means for providing connection of the respective ends of the coil with an electrical device (not shown) or the like.

Furthermore, said generator/motor 10 comprises a pipe. The stator is designed as a sleeve and sits on the pipe and the rotor is located in the pipe and is electromagnetically suspended in the sleeve.

The engine or electric linear generator/motor is coupled to the water purification sub-system and adapted to generate reduced pressure needed in the water purification sub-system for generating water vapor out of the water to be purified by deflection of one of the diaphragms 84 (see figure 2) into the pipe and to generate pressure needed in the water purification sub-system for condensing a generated water vapor into fresh water by deflection of the same or the other of the diaphragms 84 out of the pipe.

In the compression stroke (upper right) the system 70 takes electric power (similar to multi-cylinder internal combustion engine where power is taken from the outputs of other cylinders through the crankshaft). The air/fuel valve(s) 72 is/are closed and the flushing fluid valves 76 are closed, but the liquid chamber valve 78 is opened to pass the compressed liquid to the combustion chamber 80. If the upper chamber was used for water desalination, the upper chamber will be in the suction mode, where raw water will boil under the reduced pressure and turn into water vapor under reduced pressure. The required pressure in this case is vacuum pressure which is less than 1 bar absolute (e. g. 0.1 bar absolute).

In the expansion stroke (lower right) the system 70 generates electric power. The air/fuel valve(s) 72 is/are closed and the exhaust fluid valve(s) 74 and flushing fluid valve(s) 76 are closed, but the liquid chamber valve 78 is open to pass the compressed liquid to the diaphragm 84. If the upper chamber 82 was used for water desalination, the upper chamber contains water vapor and it will condense when pressurized into distilled water. The required pressure in this can be atmospheric pressure, which requires little or no additional power from the system 70.

Finally, in the exhausted stroke (bottom left), the system 70 takes electric power (similar to multi-cylinder internal combustion engine where power is taken from the outputs of other cylinders through the crank shaft). The air/fuel valve(s) 72 is/are closed and the flushing fluid valves 76 are closed, but the liquid chamber valve 78 is opened to pass the compressed liquid to the combustion chamber 80. However, occasionally the liquid chamber valve 78 is closed and the flushing fluid valve 76 is opened and an external pump (not shown) is used to replace the contaminated flushing fluid with a new one. If the upper chamber 82 was used for water desalination, the upper chamber will be in the suction mode, where raw water will boil under the reduced pressure and turn into water vapor under reduced pressure.

The component 10 can be used interchangeably as a linear electric generator and as a linear electric motor by having a suitable control system. Accordingly, similar to the crank shaft of a piston/cylinder engine, where the crank shaft stores the generated mechanical energy into its flywheel and then provides this energy for the piston operation in this suction, compression and exhaust strokes, the linear electric generator/motor serves the same purpose. Where the generated electric energy from one unit in the expansion stroke stored (in a battery or a capacitor) and then used to provide electric power in this suction, compression and exhaust stroke, also in the case of multiple cylinder pistons/cylinder engines, the mechanical power generated by one piston is used to power the other pistons with smaller flywheels (the pistons are synchronized to operate accordingly). The needed electrical power comes from one unit and is supplied to the other units.

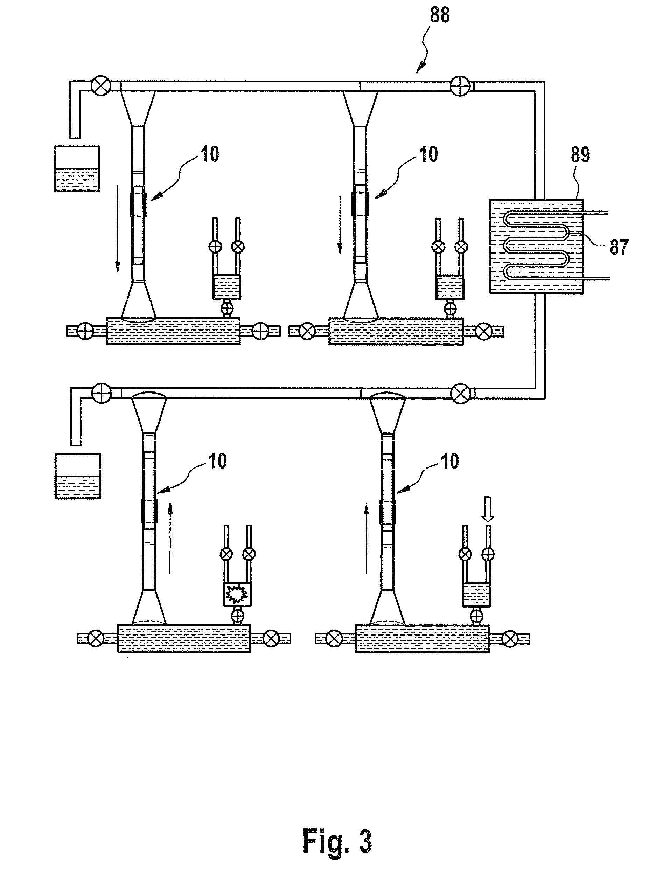

Figure 3 shows the operation (upper left: exhaust; upper right: compression; lower left: expansion; lower right: intake) of a system 88 for combined energy conversion and water purification. It is or provides a combination of an internal combustion engine with electric linear generators 10 and water desalination and cooling. The cooling may be replaced by extracting heat from the hot exhausted gases (the heat transfer fluid will be the hot exhaust gases that will be exhausted) and using the heat to pre-heat the raw water and to increase the yield of the desalinated water.

The system 88 integrates electricity generation with water desalination and cooling. It can be considered as a kind of combination of the systems shown in figures 1 and 2. The system burns the fuel and uses the heat to pressurize a fluid (cleaning fluid). The pressurized fluid moves a diaphragm and the rotor of the generator/motor 10 that generates electricity. The motion of the upper diaphragm (up and down during the four strokes) generates pressurization and suction, which is used to desalinate water and generate cooling.

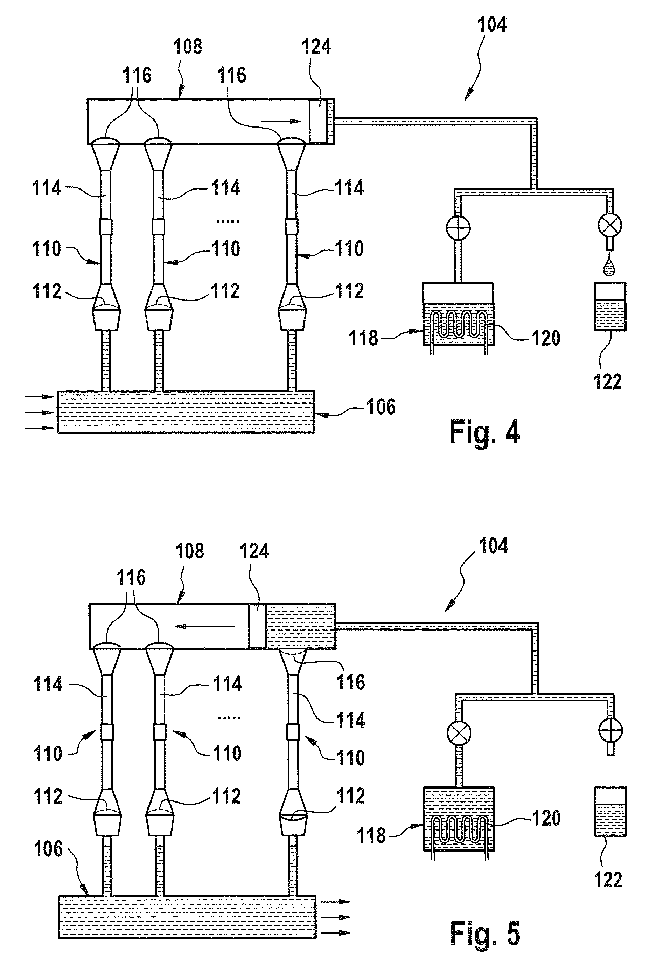

Figures 4 to 6 show a system 104 for combined energy conversion and water purification according to a further special embodiment of the invention. It can be also named as an integrated fluid pumping system. Said system 104 comprises a lower fluid pumping tube 106 and an upper water purification tube (water desalination tube) 108. Both tubes 106 and 108 are horizontally oriented and coupled by means of several electric linear generators/motors 110. Said generators/motors 110 are vertically oriented and the lower diaphragms 112 at the lower end of the pipes 114 are in direct contact with the inner of the fluid pumping tube 106 and the upper diaphragms 116 are in direct contact with the inner of the water purification tube 108.

The system 104 further comprises a raw water tank 118 for receiving water to be purified. Said tank 118 is in fluid communication with the water purification tube 108 and a tube (serpentine) 120 extends through the raw water tank 118 for conveying heat exchange fluid to be cooled.

In the water purification tube 108 water vapor gets sucked in and is recompressed to condense into distilled water. The compressed position is shown in figure 4. After suction is completed, the pressure of the fluid in the fluid pumping tube 106 at the valves' level is equal to the atmospheric pressure and the valves are closed.

In the raw water tank 118 water boils at low temperature under the reduced pressure. The heat exchange fluid, e. g. coolant, which is contained or conveyed in the tube 120, releases its heat to the boiling water and gets cooled. A distilled water tank 122 is used to retain pressurized water vapor that condenses to distilled liquid water.

In figure 4, the fluid pumping tube 106 is depressurized (suction mode). The tube 106 has lower pressure than the atmosphere to allow for the suction and fluid level to rise in the tube. The diaphragms 112 are pulled to cause suction effect which reduces the pressure at the fluid pumping tube 106. At the beginning of the operation of the system 104 all the vacuum is created at the water purification tube 108. Then this vacuum is transferred between the water purification tube 108 and the fluid pumping tube 106, as explained below.

In figure 5 the water purification tube 108 is depressurized (under suction) and the piston 124 inside it moves to the left causing the pressure to drop on the raw water. This pressure drop causes the raw water to boil and evaporate at lower temperature, thus cooling the heat transfer liquid in the tube 120. The diaphragms 112 one after the other are allowed to go to a pressurized position and the fluid level head pressurizes the fluid out and the outlet valve is opened to allow the fluid to be pumped out. The energy required for this step is explained below.

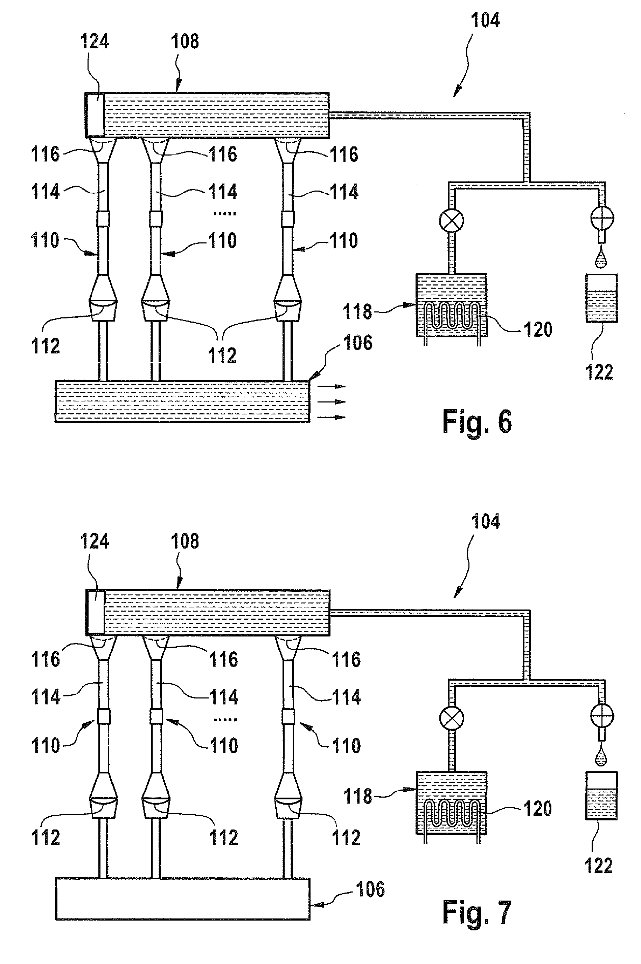

In figure 6 the water purification tube 108 is depressurized to its minimum pressure and the piston 124 inside it moves all the way to the right causing the pressure to drop on the raw water. This pressure drop causes the raw water to boil and evaporate at lower temperature, thus cooling the heat transfer liquid in the tube 120.

The fluid pumping tube 106 exit valve is opened to allow the fluid to exit the fluid pumping tube 106, while air is prevented from getting inside. The energy required for this step is explained below.

In a first preparatory step as shown in figure 7 when the water purification tube 108 is depressurized to its maximum pressure (vacuum pressure), electrical energy moves the rotors of the electric linear generators/motors 110 upwards, pulling the internal liquid from the lower ends of the pipes 114 and causing the diaphragms 112 and 116 to take a concave shape. This step requires electric energy to be supplied to the system from an (outside) source.

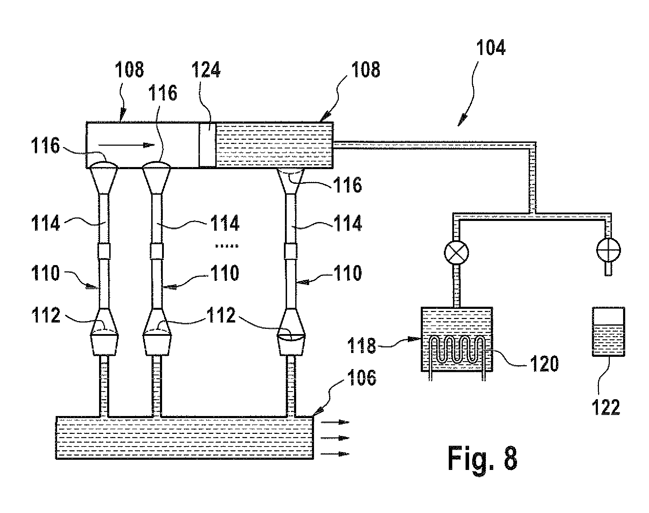

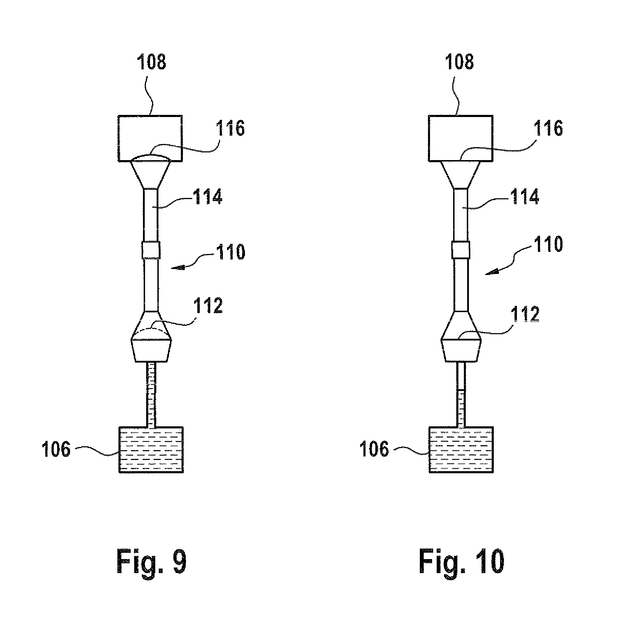

In the next preparatory step as shown in figure 8 the left most electric linear generator/motor 110 starts the motion up to create vacuum in the fluid pumping tube 106 and pressurization in the water purification tube 108. The explanation of the energy flow for this movement is given in figures 9 to 11. Then the one electric linear generator/motor next to it starts and so on. This causes the piston 124 at the water purification tube 108 to move to the right. The fluid in the fluid pumping tube 106 is allowed to enter it under the reduced pressure. After this step is completed, the fluid pumping tube 106 is completely filled and the water purification tube 108 is compressed and the system 104 operates as shown in the sequence of figures 4 to 6.

Figure 9 shows the initial state of a single electric linear generator/motor 110 of the system 104 shown in the figures 4 to 6. The upper and lower water purification tube 108 and fluid pumping tube 106 are of the same capacity. The water purification tube 108 contains gas at relatively high pressure, whereas the fluid pumping tube 106 contains relatively low pressure gas. The suction from the top is set at the magnitude such that the pressure of the liquid at the entrance valve level equals the atmospheric pressure.

In an intermediate state of the electric linear generator/motor 110 of figure 9, the upper water purification tube 108 and the lower fluid pumping tube 106 have equal pressure (see figure 10). Further, the pressure of the liquid at the liquid entrance valve level equals the atmospheric pressure. Electric energy can be generated by the motion of the internal fluid from the upper diaphragm to the lower diaphragm to equalize the pressure between the water purification tube 108 and the fluid pumping tube 106.

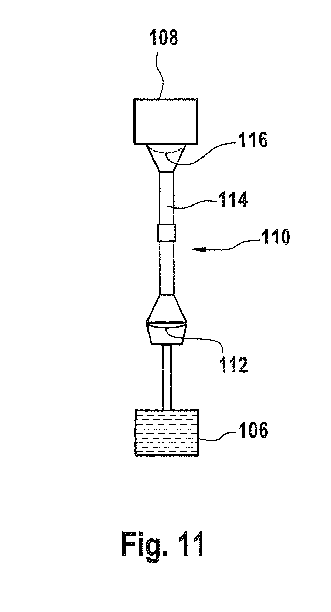

In the final state shown in figure 11, the water purification tube 108 contains gas at relatively low pressure, whereas the fluid pumping tube 106 contains gas at relatively high pressure. The liquid at the entrance valve level equals the atmospheric pressure. Electric energy is spent to pressurize the lower fluid pumping tube 106 to generate lower pressure in the upper water purification tube 108. The valves of the pressure are the same as that in the initial state, but in the respective other tube. The electric energy spent in the final state is more than the electric energy generated at the intermediate state due to friction losses.

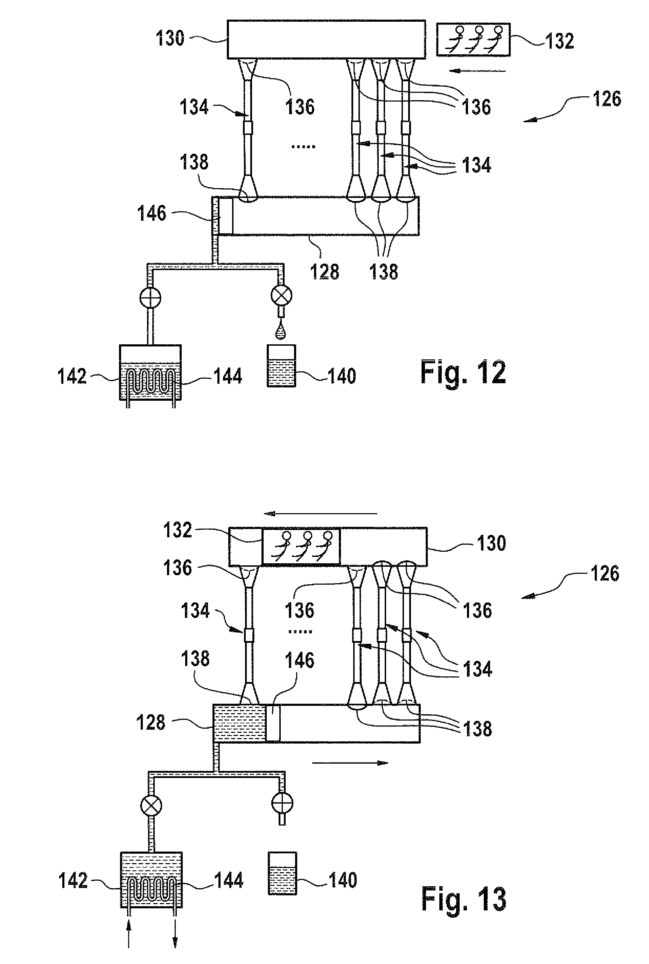

The system 126 shown in figures 12 to 15 differs from the system 104 shown in figures 4 to 6 in that the lower tube is a water purification tube 128 and that the upper tube is a capsule transit tube 130. This is a tube where a capsule which contains passengers or other cargo is transferred from one end to the other end of the tube. For example, a train transportation track might pass over homes or industrial buildings that require cooling and water purification, e. g. waste water purification. As in the system 104 of figures 4 to 6, the water purification tube 128 and the passenger's vessel tube 130 are coupled by electric linear generator/motors 134. In figure 12, the capsule transit tube 130 is depressurized. The tube 130 has lower air pressure than the atmosphere to allow for the suction and acceleration of the passenger's vessel 132.

The upper diaphragms 136 and the lower diaphragms 138 are pulled down to cause a suction effect, which reduces the pressure at the capsule transit tube 130. At the first operation of the system 126 all the vacuum is created at the water purification tube (water desalination tube) 128. Then this vacuum is transferred between the capsule transit tube 130 and the water purification tube 128 as explained below.

In the water purification tube 128, water vapor gets sucked in and is recompressed to condense into distilled water that is received in a distilled water tank 140.

In a raw water tank 142, raw water is boiled at low temperature under the reduced pressure. A tube (serpentine) 144 which contains a heat exchange fluid, e. g. coolant, is immersed in the raw water tank 140, releases its heat for the boiling water and gets cooled.

In figure 13, after the passes vessel 132 is sucked into the capsule transit tube 130 and the pressure locks are locked, the pressure behind the passenger's vessel 132 is increased, while the vacuum ahead of it is maintained. The energy required for this step is explained below.

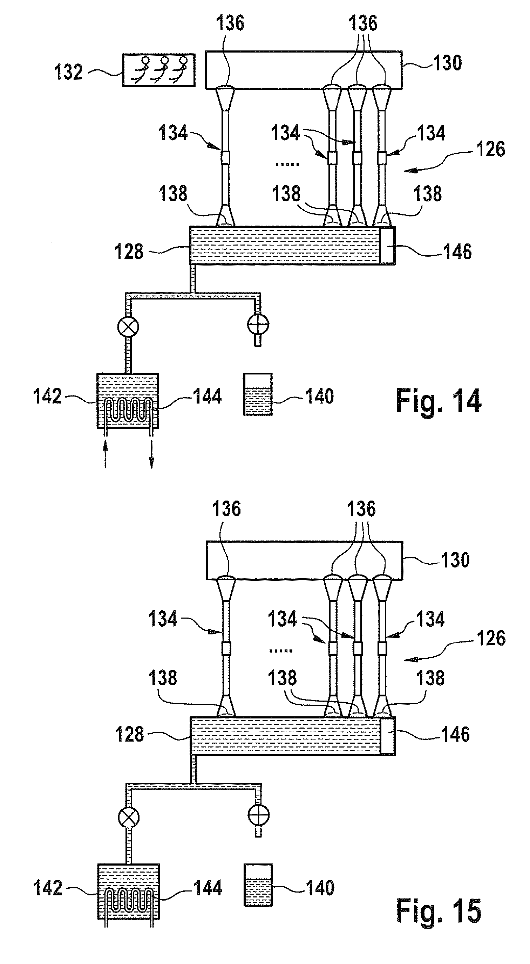

At the same stage the water purification tube 128 is depressurized and the piston 146 inside it moves to the right causing the pressure to drop on the raw water. This pressure drop causes the raw water to boil and evaporate at lower temperature, thus cooling the heat transfer liquid in the tube 144. The pressure is increased in the capsule transit tube 130 (maximum value). The pressure lock at the exit opens to allow the passenger's vessel 132 to exit the tube. The energy required for this step is explained below. Now in figure 14, the passenger's vessel 132 leaves the capsule transit tube 130 and exits the pressure lock. At the same time, the water purification tube 128 is depressurized to its minimum pressure and the piston 146 inside it moves all the way to the right causing the pressure to drop on the raw water. This pressure drop causes the raw water to boil and evaporate at lower temperature, thus cooling the heat transfer liquid in the tube 144.

Figure 15 shows the first preparatory step. Before the normal operation of the system 126, two preparatory steps are done. In the first preparatory step the water purification tube 128 is depressurized to its minimum pressure (vacuum pressure) as shown in figure 15. This step requires electrical energy to be supplied to the system from an (outside) source. The electrical energy moves the rotors of the electric linear generators/motors 134 to move up, pulling the internal liquid from the lower diaphragms 138 and causing the diaphragms to take concave shapes.

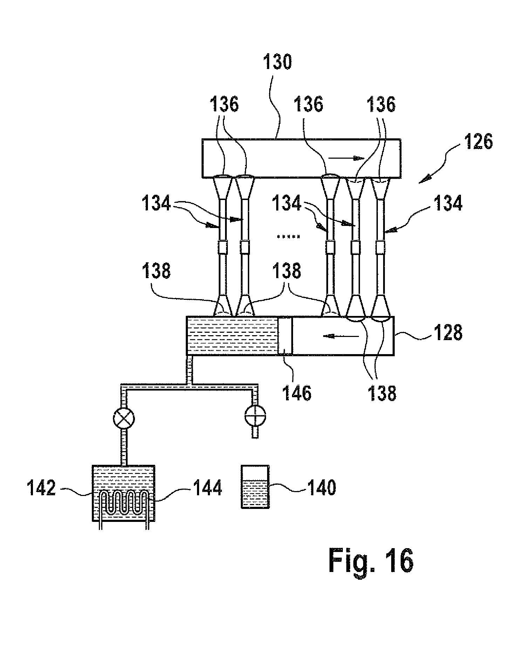

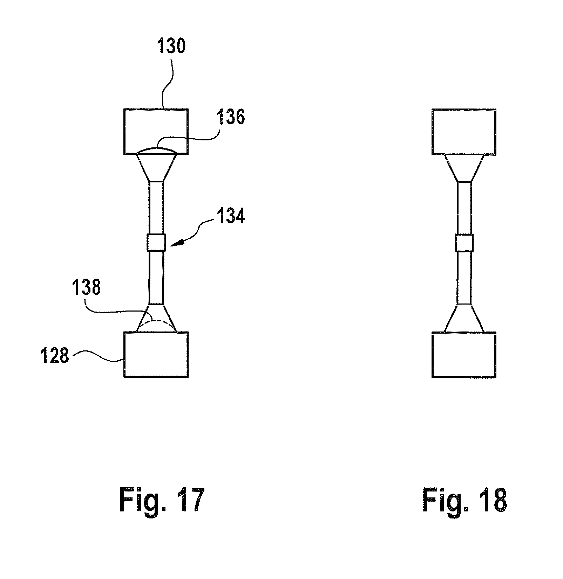

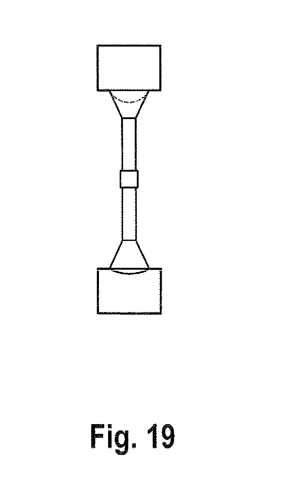

In the second preparatory step as shown in figure 16, the right most units (electric linear generators/motors 134) start the motion down to create vacuum in the passenger's vessel tube 130 and pressurization in the water purification tube 128. The explanation of the energy flow for this movement is given in figures 17 to 19. Then the one next to it and so on is moved. This causes the piston 146 to move to the left. After this step is completed, the passenger's vessel tube 130 is depressurized (vacuum) and the water purification tube 128 is compressed and the system 126 operates as shown in the sequence of the figures 12 to 14.

As shown in figure 17, in the initial state of a single electric linear generator/motor 134 of the system 126, the capsule transit tube 130 contains relatively high pressure gas and the water purification tube 128 contains relatively low pressure gas. The upper capsule transit tube 130 and lower purification tube 128 are of the same size and capacity.

According to figure 18, in the intermediate state of the single electric linear generator/motor 134, electric energy can be generated by the motion of the internal fluid from the upper diaphragm 136 to the lower diaphragm 138 to equalize the pressure between the capsule transit tube 130 and the water purification tube 128.

Finally, in the final state of the single electric linear generator/motor 134, electric energy is spent to pressurize the lower purification tube 128 and to generate lower pressure in the upper passenger's vessel tube 130. The values of the pressure are the same as in the initial state, but the tubes are exchanged. The electric energy spent in the final state is more than the electric energy generated at the intermediate state due to friction losses.

The energy flow in normal operation of the system 126 and also of the system 104 is in that way that energy is used to make up for the friction losses of the system as the vacuum and pressurized states are alternated.

The present invention - at least in a preferred embodiment provides a system that is low cost, simple, low and easy maintenance that generates electrical power from heated fluid, in addition to purifying water. It can also work as low cost multi-generation unit, which combines water purification with cooling.

At least in a preferred embodiment the system utilizes the oscillating linear motion to integrate a simple and efficient water purification system that relies on low temperature boiling under reduced pressure. Since the vacuum pressure is for example -1 bar and the atmospheric pressure is zero, a significant portion of the energy spent to create the vacuum pressure of obtained back from the atmospheric re-pressurization of the diaphragms. Also, when the low temperature (lower than the atmosphere temperature) boiling under reduced pressure is done to raw water, the system can provide cooling with little additional energy consumption. Thus, the system can combine cooling with water desalination, in a simple system. Finally, the oscillating motion which generates the low pressure that purifies the contaminated water can be interrupted and resumed with minimal effect. Thus, the system does not need complicated arrangements and energy storage, which the rotary pump systems require.

At least according to a special embodiment of the electric linear generator, a sealed fluid as a medium to transmit for example wave motion and magnetic suspension are used, which reduce the friction losses due to sealing and protect the moving parts from the direct exposure to the harsh and corrosive sea environment. This improves the efficiency and reduces the maintenance cost which is a major cost for wave energy systems.

Finally, at least a preferred embodiment of the invention does not need additional pumps for water desalination that consume valuable electricity. Instead, the vacuum and pressurization needed are supplied as a by-product of the electrical power generation sub-system and with much less additional energy consumption. Most of the energy consumed to generate vacuum is supplied back to the system in the form of atmospheric pressure. This also means that water desalination is done in a much simpler way, since it needs no external pumps. In addition, a special embodiment of the system can have cooling as another valuable by-product.

### Reference list

- 10: electric linear generator/motor
- 70: system for combined energy conversion and water purification
- 72: air/fuel valve(s)
- 74: exhaust fluid valve(s)
- 76: flushing fluid valves
- 78: liquid chamber valve
- 80: combustion chamber
- 82: upper chamber
- 84: diaphragms
- 86: system for combined energy conversion and water purification
- 87: serpentine
- 88: system for combined energy conversion and water purification
- 89: raw water tank
- 104: system for combined energy conversion and water purification
- 106: fluid pumping tube
- 108: water purification tube
- 110: electric linear generators/motors
- 112: diaphragms
- 114: pipes
- 116: diaphragms
- 118: raw water tank
- 120: tube
- 122: distilled water tank
- 124: piston
- 126: system for combined energy conversion and water purification
- 128: water purification tube
- 130: passenger's vessel tube
- 132: passenger's vessel
- 134: electric linear generators/motors
- 136: diaphragms
- 138: diaphragms
- 140: distilled water tank
- 142: raw water tube
- 144: tube
- 146: piston

## Claims

1. System (70; 86; 88; 104; 126) for combined energy conversion and water purification, in particular water desalination, comprising:
- a water purification, in particular water desalination, sub-system adapted to low temperature boil water to be purified at reduced pressure and
- at least one engine coupled to the water purification sub-system and adapted to generate reduced pressure needed in the water purification sub-system for generating water vapor out of the water to be purified and to generate pressure needed in the water purification sub-system for condensing a generated water vapor into fresh water,
wherein the engine is an electric linear generator/motor (10) comprising: an elongate stator, an electrical induction coil extending lengthwise within or around the stator, a rotor including or carrying at least one permanent magnet and capable of moving linearly to and fro relative to the stator, and a means for providing connection of the respective ends of the coil with an electrical energy storage, electrical energy source, electric device or the like, further comprising a pipe, both pipe ends being sealed by a flexible diaphragm (84; 112; 116; 136; 138) and the pipe (114) being filled with an incompressible fluid, the stator is designed as a sleeve sitting on the pipe and that the rotor is located in the pipe.

2. System (70; 86; 88; 110; 134) according to claim 1, wherein the sub-system is adapted to boil water at a temperature that is lower than the atmospheric temperature.

3. System (70; 88) according to claim 1 or 2, further including an internal combustion engine, preferably a four stroke internal combustion engine, for generating electric energy by way of the engine in an expansion stroke simultaneous to generating the pressure needed in the water purification sub-system for condensing the generated water vapor into fresh water.

4. System (70; 88) according to claim 3, wherein the system is adapted to use the heat of exhaust gas of the combustion engine for said low temperature boiling of the water.

5. System (88) according to anyone of claims 1 to 4, further comprising a heat exchanger that is arranged so as the water to be purified when being in or flowing through the heat exchanger can absorb heat needed for boiling at low temperature from a medium to be cooled that is conveyed through a tube extending through the heat exchanger.

6. System (104) according to claim 1, wherein the water purification sub-system comprises a preferably horizontally oriented fluid pumping tube (106) and a preferably horizontally oriented water purification tube (108) for receiving water to be purified, the pipe (114) of the at least one electric generator/motor (110) is vertically oriented and the lower diaphragm (112) thereof is in preferably direct contact with the inner of the fluid pumping tube (106) and the upper diaphragm thereof is in preferably direct contact with the inner of the water purification tube (108).

7. System (104) according to claim 6, further comprising a raw water tank (118) for receiving water to be purified that is in fluid communication with the water purification tube (108), and a tube (120) extending through the raw water tank (118) for conveying heat exchange fluid to be cooled.

8. System (126) according to claim 5, wherein the water purification sub-system comprises a preferably horizontally oriented capsule transit tube (130) and a preferably horizontally oriented water purification tube (128) for receiving water to be purified, the pipe of the at least one electric generator/motor (134) is vertically oriented and the lower diaphragm (138) thereof is in preferably direct contact with the inner of the water purification tube (128) and the upper diaphragm (136) thereof is in preferably direct contact with the inner of the capsule transit tube (130).

9. System (126) according to claim 8, further comprising a raw water tank (142) for receiving water to be purified that is in fluid communication with the water purification tube (128), and a tube (144) extending through the raw water tank (142) for conveying heat exchange fluid to be cooled.

## Patentansprüche

1. System (70; 86; 88; 104; 126) für kombinierte Energieumwandlung und Wasserreinigung, insbesondere Wasserentsalzung, das Folgendes umfasst:
- ein Wasserreinigungs-, insbesondere ein Wasserentsalzungsuntersystem, das ausgelegt ist, zu reinigendes Wasser bei reduzierten Druck bei niedriger Temperatur zum Sieden zu bringen und
- wenigstens ein Motor, der an das Wasserreinigungsuntersystem gekoppelt ist und der ausgelegt ist, einen reduzierten Druck zu erzeugen, der in dem Wasserreinigungsuntersystem zum Erzeugen von Wasserdampf aus dem zu reinigenden Wasser benötigt wird, und Druck zu erzeugen, der in dem Wasserreinigungsuntersystem zum Kondensieren von erzeugtem Wasserdampf in Frischwasser benötigt wird, wobei der Motor ein linearer Elektrogenerator/-motor (10) ist, der Folgendes umfasst: einen länglichen Stator, eine elektrische Induktionsspule, die sich längsgerichtet innerhalb des oder um den Stator herum erstreckt, einen Rotor, der wenigstens einen Permanentmagneten beinhaltet oder trägt und der sich linear relativ zu dem Stator hin- oder wegbewegen kann, und ein Mittel, um eine Verbindung der jeweiligen Enden der Spule zu einem elektrischen Energiespeicher, einer elektrischen Energiequelle, einer elektrischen Vorrichtung oder dergleichen bereitzustellen, wobei er ferner ein Rohr_ umfasst, wobei beide Enden des Rohrs mit einer flexiblen Membran (84; 112; 116; 136; asz) versiegelt sind und das Rohr (114) mit einer inkompressiblen Flüssigkeit gefüllt ist, wobei der Stator als eine auf dem Rohr sitzende Hülle ausgelegt ist und sich der Rotor in dem Rohr befindet.

2. System (70; 86; 88; 110; 134) nach Anspruch 1, wobei das Untersystem ausgelegt ist, Wasser bei einer Temperatur, die niedriger als die atmosphärische Temperatur ist, zum Sieden zu bringen.

3. System (70; 88) nach Anspruch 1 oder 2, das ferner einen Verbrennungsmotor, vorzugsweise einen Viertaktverbrennungsmotor, beinhaltet, zum Erzeugen von elektrischer Energie, während der Motor in einem Ausdehnungstakt gleichzeitig den Druck erzeugt, der in dem Wasserreinigungsuntersystem zum Kondensieren von dem erzeugten Wasserdampfes in Frischwasser benötigt wird.

4. System (70; 88) nach Anspruch 3, wobei das System ausgelegt ist, die Wärme von Ausstoßgas des Verbrennungsmotors für das Niedertemperatursieden des Wassers zu verwenden.

5. System (88) nach einem der Ansprüche 1 bis 4, das ferner einen Wärmetauscher umfasst, der so angeordnet ist, dass das zu reinigende Wasser, wenn es sich in dem Wärmetauscher befindet oder durch diesen fließt, die Wärme, die zum Sieden bei niedriger Temperatur benötigt wird, von einem zu kühlenden Medium, das durch eine sich durch den Wärmetauscher erstreckende Röhre transportiert wird, absorbieren kann.

6. System (104) nach Anspruch 1, wobei das Wasserreinigungsuntersystem eine vorzugsweise horizontal orientierte Flüssigkeitspumpröhre (106) und eine vorzugsweise horizontal orientierte Wasserreinigungsröhre (108) zum Aufnehmen von zu reinigendem Wasser umfasst, wobei das Rohr (114) des wenigstens einen Elektrogenerators/-motors (110) vertikal orientiert ist und sich die untere Membran (112) davon vorzugsweise in direktem Kontakt mit dem Inneren der Flüssigkeitspumpröhre (106) befindet und sich die obere Membran davon vorzugsweise in direktem Kontakt mit dem Inneren der Wasserreinigungsröhre (108) befindet.

7. System (104) nach Anspruch 6, das ferner einen Rohwassertank (118), der eine Flüssigkeitsverbindung mit der Wasserreinigungsröhre (108) aufweist, zum Aufnehmen von zu reinigendem Wasser und eine Röhre (120), die sich durch den Rohwassertank (118) hindurch erstreckt, zum Transportieren von zu kühlender Wärmetauschflüssigkeit umfasst.

8. System (126) nach Anspruch 5, wobei das Wasserreinigungsuntersystem eine vorzugsweise horizontal orientierte Kapseltransitröhre (130) und eine vorzugsweise horizontal orientierte Wasserreinigungsröhre (128) zum Aufnehmen von zu reinigendem Wasser umfasst, wobei das Rohr des wenigstens einen Elektrogenerators/-motors (134) vertikal orientiert ist und sich die untere Membran (138) davon vorzugsweise in direktem Kontakt mit dem Inneren der Wasserreinigungsröhre (128) befindet und sich die obere Membran (136) davon vorzugsweise in direktem Kontakt mit dem Inneren der Kapseltransitröhre (130) befindet.

9. System (126) nach Anspruch 8, das ferner einen Rohwassertank (142), der sich in Flüssigkeitsverbindung mit der Wasserreinigungsröhre (128) befindet, zum Aufnehmen von zu reinigendem Wasser und eine Röhre (144), die sich durch den Rohwassertank (142) hindurch erstreckt, zum Transportieren von zu kühlender Wärmetauschflüssigkeit umfasst.

## Revendications

1. Système (70 ; 86 ; 88 ; 104 ; 126) de conversion d'énergie et de purification d'eau, en particulier de désalinisation, combinées, comprenant :
- un sous-système de purification d'eau, en particulier de dessalement, apte à purifier sous pression réduite de l'eau bouillant à basse température et
- au moins un moteur accouplé au sous-système de purification d'eau et apte à produire la pression réduite nécessaire dans le sous-système de purification d'eau pour produire de la vapeur d'eau à partir de l'eau à purifier et pour produire la pression nécessaire dans le sous-système de purification d'eau pour condenser la vapeur d'eau produite en eau douce, dans lequel le moteur est un générateur/moteur (10) électrique linéaire comprenant : un stator allongé, une bobine d'induction électrique s'étendant dans le sens de la longueur à l'intérieur ou autour du stator, un rotor comprenant ou portant au moins un aimant permanent et pouvant aller et venir linéairement par rapport au stator, et un moyen pour assurer un branchement des extrémités respectives de la bobine avec un stockage d'énergie électrique, une source d'énergie électrique, un dispositif électrique ou autre chose semblable, comprenant en outre un tuyau, les deux extrémités du tuyau étant fermées hermétiquement par une membrane souple (84 ; 112 ; 116 ; 136 ; 138) et le tuyau (114) étant rempli d'un fluide incompressible, le stator étant conçu comme un manchon posé sur le tuyau et le rotor étant situé dans le tuyau.

2. Système (70 ; 86 ; 88 ; 110 ; 134) selon la revendication 1, dans lequel le sous-système est apte à faire bouillir l'eau à une température qui est inférieure à la température atmosphérique.

3. Système (70 ; 88) selon la revendication 1 ou 2, comprenant en outre un moteur à combustion interne, de préférence un moteur à combustion interne à quatre temps, pour produire de l'énergie électrique au moyen du moteur dans une course de détente simultanée à la production de la pression nécessaire dans le sous-système de purification d'eau pour condenser la vapeur d'eau produite den eau douce.

4. Système (70 ; 88) selon la revendication 3, dans lequel le système est apte à utiliser la chaleur des gaz d'échappement du moteur à combustion interne pour ladite ébullition à basse température de l'eau.

5. Système (88) selon l'une quelconque des revendications 1 à 4, comprenant en outre un échangeur de chaleur qui est agencé de sorte que l'eau à purifier, quand elle est dans l'échangeur de chaleur ou le traverse, peut absorber la chaleur nécessaire pour bouillir à basse température provenant d'un milieu à refroidir qui est transporté à travers un tube qui traverse l'échangeur de chaleur.

6. Système (104) selon la revendication 1, dans lequel le sous-système de purification d'eau comprend un tube (106) de pompage de fluide orienté de préférence horizontalement et un tube (108) de purification d'eau orienté de préférence horizontalement pour recevoir l'eau à purifier, le tuyau (114) dudit générateur/moteur électrique (110) est orienté verticalement et la membrane inférieure (112) de celui-là est en contact de préférence direct avec l'intérieur du tube (106) de pompage de fluide et la membrane supérieure de celui-là est en contact de préférence direct avec l'intérieur du tube (108) de purification d'eau.

7. Système (104) selon la revendication 6, comprenant en outre un réservoir (118) d'eau brute pour recevoir l'eau à purifier, qui est en communication fluidique avec le tube (108) de purification d'eau, et un tube (120) qui traverse le réservoir (118) d'eau brute pour transporter le fluide d'échange thermique à refroidir.

8. Système (126) selon la revendication 5, dans lequel le sous-système de purification d'eau comprend un tube (130) de transit de capsule orienté de préférence horizontalement et un tube (128) de purification d'eau orienté de préférence horizontalement pour recevoir l'eau à purifier, le tuyau dudit générateur/moteur électrique (134) est orienté verticalement et la membrane inférieure (138) de celui-là est en contact de préférence direct avec l'intérieur tube (128) de purification d'eau et la membrane supérieure (136) de celui-là est en contact de préférence direct avec l'intérieur du tube (130) de transit de capsule.

9. Système (126) selon la revendication 8, comprenant en outre un réservoir (142) d'eau brute pour recevoir l'eau à purifier, qui est en communication fluidique avec le tube (128) de purification d'eau, et un tube (144) qui traverse le réservoir (142) d'eau brute pour transporter le fluide d'échange thermique à refroidir.
